# EUROPÄISCHE PATENTSCHRIFT

(11) **EP 2 722 686 B1**
(45) Veröffentlichungstag und Bekanntmachung des Hinweises auf die Patenterteilung: **03.10.2018**
(21) Anmeldenummer: 13189455.2
(22) Anmeldetag: 21.10.2013
(51) Int. Cl.: G01S 13/90

(54) **INTERFEROMETRISCHES SAR-SYSTEM**
INTERFEROMETRIC SAR SYSTEM
SYSTÈME SAR INTERFÉROMÉTRIQUE

(30) Priorität: 22.10.2012 DE 102012219229
(43) Veröffentlichungstag der Anmeldung: 23.04.2014
(73) Patentinhaber: Deutsches Zentrum für Luft- und Raumfahrt e.V., 51147 Köln (DE)
(72) Erfinder: Lopez-Dekker, Francisco, 81245 München (DE); Younis, Marwan, 82234 Weßling (DE); Krieger, Gerhard, 82131 Gauting (DE); Schaefer, Christoph, 88048 Friedrichshafen (DE)
(74) Vertreter: Fink Numrich

(56) Entgegenhaltungen:
- DE-A1-102006 022 814
- US-A1- 2004 150 547
- MARWAN YOUNIS ET AL: "Advanced operation mode techniques for an interferometric Synthetic Aperture Radar", GEOSCIENCE AND REMOTE SENSING SYMPOSIUM (IGARSS), 2012 IEEE INTERNATIONAL, IEEE, 22 July 2012 (2012-07-22), pages 1614-1617, XP032469034, DOI: 10.1109/IGARSS.2012.6351220 ISBN: 978-1-4673-1160-1
- SIGURD HUBER ET AL: "Spaceborne Reflector SAR Systems with Digital Beamforming", IEEE TRANSACTIONS ON AEROSPACE AND ELECTRONIC SYSTEMS, IEEE SERVICE CENTER, PISCATAWAY, NJ, US, vol. 48, no. 4, 1 October 2012 (2012-10-01), pages 3473-3493, XP011467968, ISSN: 0018-9251, DOI: 10.1109/TAES.2012.6324728

## Beschreibung

Die Erfindung betrifft ein Seitensicht-SAR-System, das heißt ein Radar mit synthetischer Apertur. Insbesondere betrifft die Erfindung ein satelliten-gestütztes Seitensicht-SAR-System. Weiter betrifft die Erfindung ein Verfahren zum Betrieb eines solchen SAR-Systems.

SAR-Systeme ermöglichen die Fernerkundung der Erdoberfläche für die Erfassung von an der Erdoberfläche reflektierten Radarpulsen, welche von dem SAR-System ausgesendet werden, das sich auf einer Plattform mit konstanter Geschwindigkeit über der Erdoberfläche bewegt. Bei einem solchen System macht man sich die Erkenntnis zunutze, dass aufgrund der bewegten Plattform die gleichen Bereiche der Erde in unterschiedlichen Positionen erfasst werden, wodurch eine Amplituden-Phaseninformation und schließlich ein Radarbild der Erdoberfläche erhalten werden kann.

Bei einem SAR-System stehen sich die erreichbare Auflösung und die von dem SAR-System erfassbare Streifenbreite, d.h. die Breite des über das Radarsystem erfassbaren Streifens auf der Erdoberfläche in Richtung senkrecht zur Flugrichtung der Plattform, als konkurrierende Parameter gegenüber. Zur Erhöhung der Auflösung bei gegebener Streifenbreite von SAR-Systemen ist die Verwendung von Multi-Apertur-Systemen bekannt, bei denen Radarechos durch mehrere Empfänger gleichzeitig erfasst werden.

Es ist auch bekannt, ein satellitengestütztes, abbildendes Radarsystem mit synthetischer Apertur (*Synthetic Aperture Radar*: SAR) interferometrisch zu betreiben. Bei einem interferometrischen Betrieb des SAR-Systems werden zwei oder mehrere Sende- und/oder Empfangsphasenzentren verwendet. Bei einem so genannten voll interferometrischen SAR-System wird eine elektromagnetische Welle sukzessiv durch jedes der Sende-Phasenzentren abgestrahlt und das reflektierte Echo gleichzeitig mit allen Phasenzentren empfangen. Bei einem so genannten monostatischen System wird gleichzeitig eine Antenne zum Senden und Empfangen genutzt. Bei einem so genannten einfach-interferometrischen System wird ein einziges, festes Phasenzentrum zum Senden genutzt.

Die Qualität bzw. Leistungsfähigkeit eines abbildenden Radarsystems wird mit einem so genannten Bewertungsfaktor gekennzeichnet. Für ein optimales interferometrisches System ist der Quotient aus Streifenbreite und Azimut-Auflösung maximal. Dieser Quotient stellt den Bewertungsfaktor dar. Unter der Streifenbreite wird ein Geländestreifen verstanden, welcher von einem Radarpuls durch die Fortbewegung der realen Antenne momentan überstrichen und erfasst wird. Der Azimutwinkel bezeichnet den Winkel zwischen der Flugrichtung und der Range-Richtung.

Im Vergleich zu einem einfach interferometrischen System erfordert ein vollinterferometrisches Radarsystem entweder die Verdoppelung einer Pulswiederholrate ausgesendeter elektromagnetischer Wellen (Pulse) oder eine Verdoppelung der Antennenlänge. Hierdurch ergibt sich entweder eine Reduzierung der Streifenbreite oder eine Verschlechterung der Auflösung. Dies bedeutet, ein vollinterferometrischer Betrieb eines SAR-Systems zieht in etwa eine Halbierung der Bewertungszahl nach sich. Da bei SAR-Systemen versucht wird, die Antennenfläche minimal zu halten, ergibt sich durch die Interferometrie eine Begrenzung, welche auch durch Techniken der digitalen Strahlformung bislang nicht behoben werden konnte.

Aus der EP 1 241 487 A1 ist ein SAR-System bekannt, welches digitale Strahlformungstechniken nutzt. Dieses Seitensicht-SAR-System umfasst eine Sendeapertur und eine Empfangsapertur verschiedener Größe, die von der Sendeapertur getrennt ist und in mehrere Empfangs-Subaperturen aufgeteilt ist. Jede Subapertur deckt den von der Sendeapertur beleuchteten Bereich ab. Das Signal von jeder Subapertur wird hierbei in einem separaten Kanal empfangen. Jeder Kanal liefert ein separates Eingangssignal für eine nachfolgende digitale Signalverarbeitung. Dieses Verfahren ist auch unter dem Begriff SCORE (*Scan-on-Receive*) bekannt und beispielsweise in [1] beschrieben. Auch dieses aus dem Stand der Technik bekannte SAR-System weist den Nachteil eines verringerten Bewertungsfaktors auf.

Die DE 10 2006 022 814 A1 offenbart ein SAR-System mit mehreren SubAperturen, die innerhalb jedes einzelnen Sendeimpulses so angesteuert werden, dass sich raumzeitlich nicht separierbare mehrdimensionale Wellenform als Sendesignal-Impulsform ergibt, wobei die Sendesignal-Impulsform mit einer empfangsseiteigen räumlichen Filterung mittels einem auf diese Sendesignal-Impulsform abgestimmten "Digital Beamforming" kombiniert ist.

Die US 2004/0150547 A1 offenbart ein Seitensicht-SAR-System, das eine SendeApertur und eine Empfangsapertur mit einer Mehrzahl an Subaperturen umfasst. Es umfasst weiter Mittel zum Verarbeiten der Signale jeder Empfangs-Subapertur mit einem Phasenverschiebungsmittel, um das Empfangssignal jeder Empfangs-Subapertur mit einem Zeit- oder Frequenzwert zu verschieben, und einem Summationsmittel, um die resultierenden Signale der Empfangs-Subapertur entlang der Elevationsrichtung zu addieren.

Aus Marwan Younis et al: "Advanced operation mode techniques for an Interferometric Synthetic Aperture Radar", GEOSCIENCE AND REMOTE SENSING SYMPOSIUM (IGARSS), 2012 IEEE, 22. Juli 2012 (2012-07-22), Seiten 1614 bis 1617, ist ein SAR-System mit zwei räumlich getrennten Sendeantennen und zumindest einer Empfangsantenne bekannt, das dazu ausgebildet ist, innerhalb einer Pulswiederholzeit zeitlich versetzt zwei oder mehr Pulse derart auszusenden, dass die Pulse von Phasenzentren, die an unterschiedlichen Positionen quer zur Flugrichtung angeordnet sind, abgestrahlt werden. Die Pulse beleuchten einen gleichen Bodenstreifen. Die empfangenen Echos der Pulse werden durch digitale Strahlformung voneinander getrennt.

Aus Sigurd Huber et al.: "Spacebome Reflector SAR Systems with Digital Beamforming", IEEE TRANSACTIONS ON AEROSPACE AND ELECTRONIC SYSTEMS, IEEE SERVICE CENTER, PISCATAWAY, NJ, US, Bd. 48, Nr. 4, 1. Oktober 2012, Seiten 3473 bis 3493 ist ein weiteres SAR-System bekannt, das das Verfahren der digitalen Strahlformung nutzt.

Es ist Aufgabe der vorliegenden Erfindung, ein SAR-System anzugeben, welches baulich und/oder funktional derart verbessert ist, dass bei gegebener Streifenbreite eine höhere geometrische Azimut-Auflösung oder bei gegebener Azimut-Auflösung eine größere Streifenbreite möglich ist. Eine weitere Aufgabe der Erfindung besteht darin, ein Verfahren zum Betreiben eines SAR-Systems anzugeben.

Diese Aufgaben werden gelöst durch ein SAR-System gemäß den Merkmalen des Patentanspruches 1 und ein Verfahren zum Betreiben eines SAR-Systems gemäß den Merkmalen des Patentanspruches 9. Vorteilhafte Ausgestaltungen ergeben sich aus den abhängigen Patentansprüchen.

Ein erfindungsgemäßes SAR-System ist dazu ausgebildet, innerhalb einer Pulswiederholzeit zeitlich versetzt zwei oder mehr Pulse derart auszusenden, dass die Pulse von Phasenzentren, die an unterschiedlichen Positionen quer zur Flugrichtung angeordnet sind, abgestrahlt werden und die Pulse einen gleichen Bodenstreifen beleuchten. Die empfangenen Echos der Pulse werden durch digitale Strahlformung voneinander getrennt. Das SAR-System zeichnet sich dadurch aus, dass dieses zumindest zwei räumlich getrennte Sendeantennen und zumindest eine Empfangsantenne umfasst. Das SAR-System zeichnet sich dadurch aus, dass ein auf den ersten Puls folgender zweiter Puls sich mit dem ersten Puls überschneidet, wobei die Radarechos durch Pulsmodulation voneinander getrennt sind, und zur Trennung der Echos der Pulse das Verfahren Scan-on-Receive eingesetzt wird.

Bei einem erfindungsgemäßen Verfahren zum Betreiben eines SAR-Systems werden innerhalb einer Pulswiederholzeit zeitlich versetzt zwei oder mehr Pulse ausgesendet, wobei die Pulse von Phasenzentren, die an räumlich getrennten Positionen quer zur Flugrichtung angeordnet sind, abgestrahlt werden und die Pulse einen gleichen Bodenstreifen beleuchten. Die empfangenen Echos der Pulse werden durch digitale Strahlformung voneinander getrennt. Das Verfahren zeichnet sich dadurch aus, dass der auf den ersten Puls folgende zweite Puls überschneidend mit dem ersten Puls ausgesendet wird, wobei die Radarechos der Pulse durch das Verfahren Scan-on-Receive getrennt werden.

Werden innerhalb einer Pulswiederholzeit zeitlich versetzt zwei oder mehr Pulse von unterschiedlichen Phasenzentren abgestrahlt und werden die empfangenen Echos durch Nutzung digitaler Strahlformungstechniken voneinander getrennt, kann ein SAR-System im voll-interferometrischen Betrieb betrieben werden, ohne eine Reduzierung der geometrischen Azimut-Auflösung oder Streifenbreite in Kauf nehmen zu müssen. Hierdurch kann der Bewertungsfaktor maximiert werden. Gegenüber bekannten SAR-Systemen ist es möglich, den Bewertungsfaktor um den Faktor 2 zu erhöhen.

Es ist zweckmäßig, wenn ein zeitlicher Versatz zwischen zwei aufeinander ausgesendeten Pulsen wesentlich kleiner als die Pulswiederholzeit ist.

Erfindungsgemäß umfasst das erfindungsgemäße SAR-System zumindest zwei Sendeantennen und zumindest eine Empfangsantenne. Die Nutzung von zumindest zwei Sendeantennen ermöglicht die Nutzung der Interferometrie, wobei die Anzahl der Phasenzentren beim Aussenden der Pulse von der Anzahl der Sendeantennen und Empfangsantennen abhängt. Eine Erhöhung der Antennenanzahl
führt zu einer Verbesserung des Bewertungsfaktors und/oder kann für die Interferometrie genutzt werden. Umfasst das SAR-System mehr als eine Empfangsantenne, so kann die abtastbare Streifenbreite erhöht werden.

Gemäß einer weiteren zweckmäßigen Ausgestaltung ist die Anzahl der Pulse innerhalb der Pulswiederholzeit maximal der Anzahl der Sendeantennen.

Um die Phasenzentren quer zu einer Flugrichtung des SAR-Systems anzuordnen, können die zumindest zwei Sendeantennen an einem oder mehreren Auslegern einer Plattform angeordnet sein. Demgegenüber können die Empfangsantenne(n) an der Plattform selbst angeordnet sein. An der Plattform selbst oder direkt heißt, dass die Empfangsantenne(n) an keinem Ausleger angeordnet sind oder sein müssen. Ein Vorteil dieser Vorgehensweise besteht darin, dass die Sendeantennen wesentlich kleiner und leichter als die Empfangsantennen(n) sind. Hieraus ergibt sich eine einfachere Ausgestaltung des SAR-Systems, da die Ausleger einfacher ausgelegt sein können.

Eine Anordnung quer zur Flugrichtung ist z.B. dann gegeben, wenn die Phasenzentren orthogonal zur Flugrichtung des SAR-Systems angeordnet sind. Es versteht sich, dass auch geringfügige Abweichungen von einer orthogonalen Ausrichtung zulässig sind.

Ebenso ist es möglich, die zumindest zwei Sendeantennen und die Empfangsantenne(n) an unterschiedlichen Plattformen eines SAR-Systems anzuordnen, um die Phasenzentren quer zu einer Flugrichtung des SAR-Systems zu erhalten. In dieser Variante können die Sendeantennen an dem oder den Auslegern der unterschiedlichen Plattformen angeordnet sein. Ebenso können die Sendeantennen direkt an den unterschiedlichen Plattformen angeordnet sein. Es können eine Sende- und eine Empfangsantenne an einer Plattform und die zumindest eine weitere Sendeantenne an einer anderen Plattform angeordnet sein. Ebenso kann jede der Antennen an einer eigenen Plattform angeordnet sein. In diesem Fall weist das SAR-System wenigstens drei Plattformen auf.

Die Empfangsantenne ist gemäß einer weiteren Ausgestaltung eine Antenne, welche ein Array an Empfangseinheiten umfasst. Ebenso kann die Sendeantenne eine Antenne sein, welche ein Array an Sendeeinheiten umfasst. Insbesondere können die Antennen Reflektorantennen, planare Antennen oder Reflektorarrays sein. Wenn die Sendeantenne ein Array an Sendeeinheiten umfasst, ist es ausreichend, wenn die Sendeantennen jeweils wenigstens zwei Sendeeinheiten umfassen. Demgegenüber weisen die Empfangsantennen eine Vielzahl an Empfangseinheiten auf, um mittels der digitalen Strahlformung eine hohe Richtungsabhängigkeit (directivity) realisieren zu können.

Das SAR-System ist dazu ausgebildet, zur Trennung der Echos der Pulse das Verfahren Scan-on-Receive einzusetzen. Bei diesem Verfahren wird das Echo der zwei oder mehr Pulse von einer bestimmten Empfangseinheit der zumindest einen Empfangsantenne zu unterschiedlichen, aufeinander folgenden Zeitpunkten empfangen. Jede Empfangseinheit (jede Empfangseinheit repräsentiert einen Kanal) liefert somit zeitlich aufeinanderfolgend für jedes der empfangenen Echos ein separates Signal für die nachfolgende digitale Signalverarbeitung. Hierzu kann beispielsweise auf das in [1] beschriebene Verfahren zurückgegriffen werden, das zeitlich aufeinanderfolgend für jedes empfangene Echo durchgeführt wird.

Die Erfindung wird nachfolgend näher anhand eines Ausführungsbeispiels in der Zeichnung erläutert. Es zeigen:
Fig. 1 eine schematische Darstellung eines erfindungsgemäßen SAR-Systems in einer Draufsicht,
Fig. 2 eine perspektivische Darstellung eines erfindungsgemäßen SAR-Systems,
Fig. 3 eine schematische Darstellung der Erzeugung zweier von unterschiedlichen Phasenzentren ausgehenden Pulsen auf denselben Bodenstreifen,
Fig. 4 ein Diagramm, das die Aussendung von zwei zeitlich versetzten Pulsen innerhalb einer Pulswiederholzeit illustriert,
Fig. 5 ein Diagramm, das die Antennenverstärkung in Abhängigkeit eines Betrachtungswinkels illustriert, und
Fig. 6 ein Diagramm, das resultierende Mehrdeutigkeiten in Abhängigkeit eines Signalverhältnisses illustriert.

Zum besseren Verständnis wird nachfolgend das Prinzip einer SAR-Messung anhand der von einem satellitengestützten SAR-System ausgesendeten Radarstrahlung erläutert. Das SAR-System (nachfolgend auch als Satellit bezeichnet) bewegt sich in einer Richtung, welche als Azimut-Richtung bezeichnet wird. Der Satellit, dessen Höhe über der Erdoberfläche bekannt ist, sendet während seiner Bewegung in Azimut-Richtung kontinuierlich Radarpulse über eine Sendeantenne in Richtung zur Erdoberfläche aus. Von jedem ausgesendeten Radarpuls wird das Radarecho erfasst, indem die an der Erdoberfläche reflektierte Radarstrahlung in der sog. Range-Richtung, welche sich senkrecht zur Flugrichtung oder Azimut-Richtung des Satelliten erstreckt, mit einem Empfänger zeitlich abgetastet wird.

Als Folge erhält man eine Vielzahl von Abtastungen, wobei jede Abtastung dem Radarecho eines bestimmten Radarpulses und einer Range-Position entspricht. Die Zuordnung einer Abtastung zu einem Radarpuls wird dabei durch eine Azimut-Position repräsentiert, welche der geometrische Mittelpunkt zwischen der Azimut-Position des Senders beim Aussenden des Radarpulses und der Azimut-Position des Empfängers beim Empfang des Radarechos des Radarpulses ist. Der Sender und der Empfänger sind dabei z.B. Bestandteil einer kombinierten Sende-Empfangsantenne, welche im Sendebetrieb den Sender und im Empfangsbetrieb den Empfänger darstellt. In diesem Fall handelt es sich bei dem SAR-System um ein sog. Einzel-Apertur-System, bei dem die Radarechos nur durch einen einzelnen Empfänger, d.h. nicht gleichzeitig durch mehrere Empfänger, erfasst werden.

Bei der Auswertung werden nur Informationen der Radarstrahlung innerhalb eines von dem ausgesendeten Radarpuls beleuchteten Bodenstreifens (englisch: Swath) erfasst, der eine Breite von mehreren Kilometern, z.B. einige zehn oder hundert Kilometer, aufweisen kann.

Das Prinzip der SAR-Messung beruht nunmehr darauf, dass jeweilige Punkte auf die Erdoberfläche mehrfach aus unterschiedlichen Blickwinkeln aufgrund der Bewegung des Satelliten erfasst werden. Aufgrund des bekannten Doppler-Effekts kommt es bei der Erfassung des Radarechos zu einer Frequenzverschiebung, die geeignet ausgewertet werden kann, wodurch schließlich für die Punkte der Erdoberfläche, an denen die Radarpulse reflektiert werden, eine Amplituden- und Phaseninformation und somit ein Bildpunkt der Erdoberfläche erhalten wird. Die entsprechende Berechnung von Bildpunkten der Erdoberfläche aus SAR-Daten ist dem Fachmann bekannt und wird deshalb nicht weiter im Detail erläutert. Mit dem SAR-Verfahren wird durch eine Vielzahl von Radarpulsen eines Radarsenders kleiner Apertur eine größere synthetische Apertur entsprechend der Ausdehnung des Radarpulses auf der Erdoberfläche simuliert.

Üblicherweise werden in einem derartigen SAR-System Radarpulse mit einer festen Pulswiederholrate PRF (*Pulse Repetition Frequency*) ausgesendet. Die Pulswiederholrate ist abhängig von der Apertur des Empfängers und der Geschwindigkeit, mit der sich der Satellit in Azimut-Richtung bewegt. Um mit einem Einzel-Apertur-Radarsystem einen breiten Streifen auf der Erdoberfläche zu erfassen, ist die Pulswiederholrate PRF möglichst klein zu wählen. Dies hat jedoch wiederum den Nachteil, dass hierdurch die Auflösung in Azimut-Richtung immer geringer wird.

Um eine hohe Auflösung in Azimut-Richtung mit gleichzeitig großem Abstand zwischen den Bereichen zu erreichen, ist es aus dem Stand der Technik bekannt, sog. Multi-Apertur-Radarsysteme zu verwenden, bei denen das Radarsignal gleichzeitig durch mehrere Empfänger erfasst wird. Dieses System führt jedoch zu einer längeren Antenne in Azimut-Richtung.

Ferner kann gegebenenfalls die Pulswiederholrate erhöht werden, wobei hier die Gefahr der Entstehung von Mehrdeutigkeiten entsteht. Eine Mehrdeutigkeit ergibt sich beispielsweise dann, wenn das Radarecho eines zuerst ausgesendeten Radarpulses noch nicht vollständig empfangen ist, bevor ein weiterer Radarpuls durch das SAR-System ausgesendet wurde.

Das nachfolgend näher beschriebene, erfindungsgemäße SAR-System nutzt die dem Fachmann hinlänglich bekannte Interferometrie, bei der Informationen von zwei oder mehreren Sende- und/oder Empfangsphasenzentren ausgewertet werden. Typischerweise kommt hierbei ein Versatz in Flugrichtung, d.h. in Azimut-Richtung, zur Messung der Geschwindigkeit (englisch: *along-track interferometry*) oder senkrecht zur Flugrichtung zur Höhenmessung (englisch: *across-track interferometry*) zur Anwendung. Bei bekannten SAR-Systemen wird hierbei entweder die Streifenbreite oder die Auflösung in Azimut-Richtung beim Übergang in den voll interferometrischen Betrieb reduziert. Bei einem konventionellen voll interferometrischen System würden die beiden Pulse innerhalb von zwei PRI-Perioden von den beiden Sende-Phasenzentren abgestrahlt. Dies ist der sogenannte "ping pong mode". Es werden also zwei PRIs benötigt, was die Abtastung pro Kanal reduziert und damit die Auflösung verringert. Alternative könnten die PRIs kürzer gemacht werden, um auf die eigentliche Auflösung zu kommen. In diesem Fall wird die Streifenbreite wegen des Timings reduziert.

Das vorgeschlagene SAR-System löst dieses Problem dadurch, dass durch das SAR-System innerhalb einer Pulswiederholzeit zwei oder mehr Pulse derart ausgesendet werden, dass die abgestrahlten elektromagnetischen Wellen von unterschiedlichen Phasenzentren abgestrahlt werden. Dies kann beispielsweise durch das Vorsehen zweier räumlich getrennter Sendeantennen erzielt werden. Die Sendeantennen werden derart angesteuert bzw. sind derart an einer Plattform angeordnet, dass alle Pulse, welche innerhalb der Pulswiederholzeit ausgesendet werden, den gleichen Bodenstreifen beleuchten. Die empfangenen Echos der zeitlich versetzt ausgesendeten Pulse werden beispielsweise durch Methoden der digitalen Strahlformung durch eine oder mehrere Empfangsantennen mit jeweils mehreren Empfangseinheiten voneinander getrennt. Hierdurch kann der eingangs definierte Bewertungsfaktor um den Faktor 2 erhöht werden.

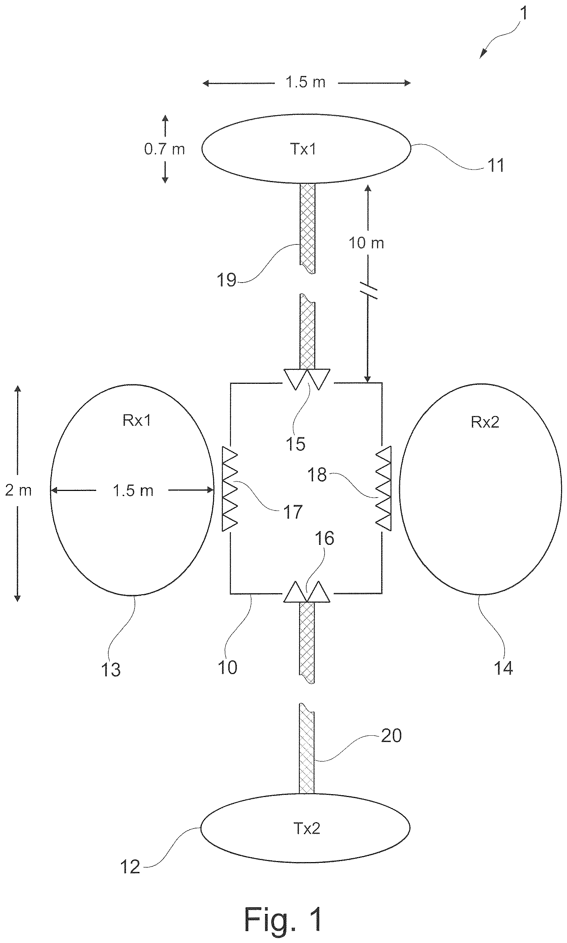

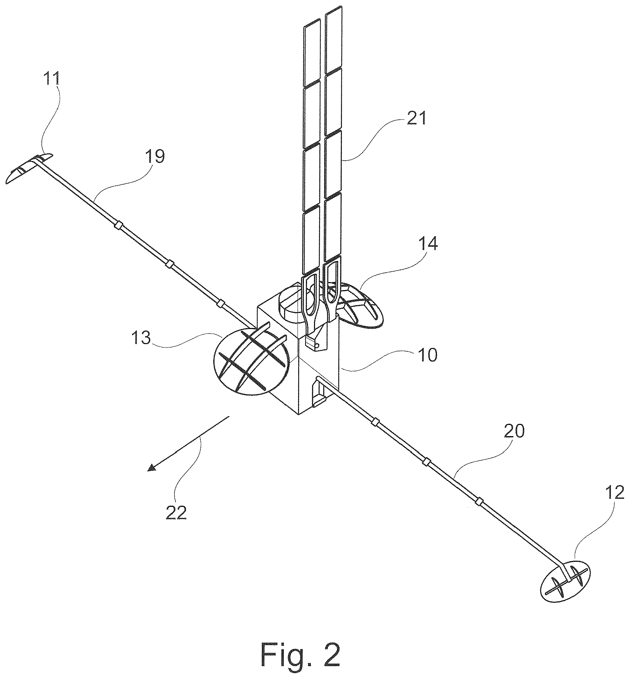

Die Figuren 1 und 2 zeigen eine schematische und eine perspektivische Darstellung eines erfindungsgemäßen SAR-Systems. Das satellitengestützte SAR-System 1 umfasst eine Plattform 10, an der an zwei gegenüberliegenden Enden, in einer gemeinsamen Achse liegend, zwei Ausleger 19, 20 angeordnet sind. An den Enden der Ausleger 19, 20 sind eine erste Sendeantenne 11 (Tx1) und eine zweite Sendeantenne 12 (Tx2) angeordnet. An der Plattform 10 sind zwei im Vergleich zu den Sendeantennen 11, 12 größere Empfangsantennen 13, 14 (Rx1, Rx2) angeordnet. Die Sendeantennen 11, 12 und die Empfangsantennen 13, 14 sind beispielhaft als Reflektorantennen ausgebildet, denen jeweilige Sendespeiseeinheiten 15, 16 sowie Empfangsspeiseeinheiten 17, 18 zugeordnet sind. Lediglich beispielhaft sind den Sendeantennen 11, 12 zwei Sendespeiseeinheiten 15, 16 zugeordnet, wobei die Anzahl der Sendespeiseeinheiten 15, 16 auch höher sein könnte. Zur Durchführung einer digitalen Strahlformung sind den Empfangsantennen 13, 14 demgegenüber jeweils eine Vielzahl an Empfangsspeiseeinheiten 17, 18 zugeordnet.

Die Ausleger 19, 20 erstrecken sich orthogonal zur Azimut-Richtung, d.h. der in Fig. 2 mit dem Bezugszeichen 22 gekennzeichneten Flugrichtung des SAR-Systems. Die Ausleger 19, 20 weisen eine Länge von beispielsweise 10 m auf. Die Ausdehnung der Sendeantennen 11, 12 in Azimut-Richtung beträgt beispielsweise 1,5 m, die Erstreckung in Richtung der Ausleger 19, 20 beispielsweise 0,7 m. Demgegenüber ist die Erstreckung der Empfangsantennen 13, 14 in Azimut-Richtung beispielsweise 1,5 m, in Erstreckungsrichtung der Ausleger 19, 20 beispielsweise 2,0 m.

Obwohl das in den Figuren 1 und 2 dargestellte Ausführungsbeispiel zwei Empfangsantennen 13, 14 aufweist, könnte ein erfindungsgemäßes SAR-System auch lediglich eine einzige Empfangsantenne 13 aufweisen.

Eine Energieversorgung des SAR-Systems erfolgt beispielsweise mittels der in Fig. 2 schematisch dargestellten Solarzellen 21.

Ein derartiges SAR-System arbeitet beispielsweise im Ka-Band (35 GHz) und ist zur sog. *single-pass cross-track-interferometrie* ausgelegt. Dies erfordert eine Bestrahlung der zu vermessenden Erdoberfläche von zwei Phasenzentren, welche aufgrund der Anordnung der Sendeantennen an den Auslegern in einer Richtung orthogonal zur Flugrichtung 22 separiert sind. Der Vorteil dieser Ausgestaltung besteht darin, dass die Sendeantennen 11, 12 kleiner und leichter im Vergleich zu den Empfangsantennen 13, 14 sind, weswegen die Ausleger 19, 20 im Gegensatz zu SAR-Systemen, bei denen die Empfangsantennen an den Auslegern angeordnet sind, kleiner und leichter gebaut werden können. Die Anordnung der zwei Sendeantennen an den Enden der Ausleger 19, 20 resultiert, wie erläutert, aus der Notwendigkeit, zwei Pulse innerhalb der Pulswiederholzeit unter Ausleuchtung des gleichen Bodenstreifens auszusenden.

Die Verwendung zweier Empfangsantennen 13, 14 anstelle einer an sich lediglich einzig notwendigen Empfangsantenne ermöglicht eine Vergrößerung des Bodenstreifens um den Faktor 2, wodurch der Bewertungsfaktor zusätzlich erhöht werden kann.

Wie erläutert, sind die Sende- und Empfangsantennen 13, 14 als Reflektorantennen ausgebildet, welchen jeweils ein Array an Speiseelementen 17, 18 zugeordnet ist. Auf der Empfangsseite wird für jede Empfangsantenne die Mehrzahl an Empfangsspeiseelementen benötigt, um ein digitale Strahlformung, beispielsweise das dem Fachmann bekannte Scan-On-Receive (SCORE)-Verfahren einsetzen zu können. Dabei wird das SCORE-Verfahren für jeden des innerhalb einer Pulswiederholzeit ausgesendeten Pulses und das jeweils empfangene Echo in identischer Weise angewandt. Aufgrund des zeitlichen Versatzes des Aussendens der Pulse und damit des Empfangs der jeweiligen Echos können die von den jeweiligen Empfangseinheiten 17 bzw. 18 empfangenen Echos dem einen oder dem anderen Puls zugeordnet werden.

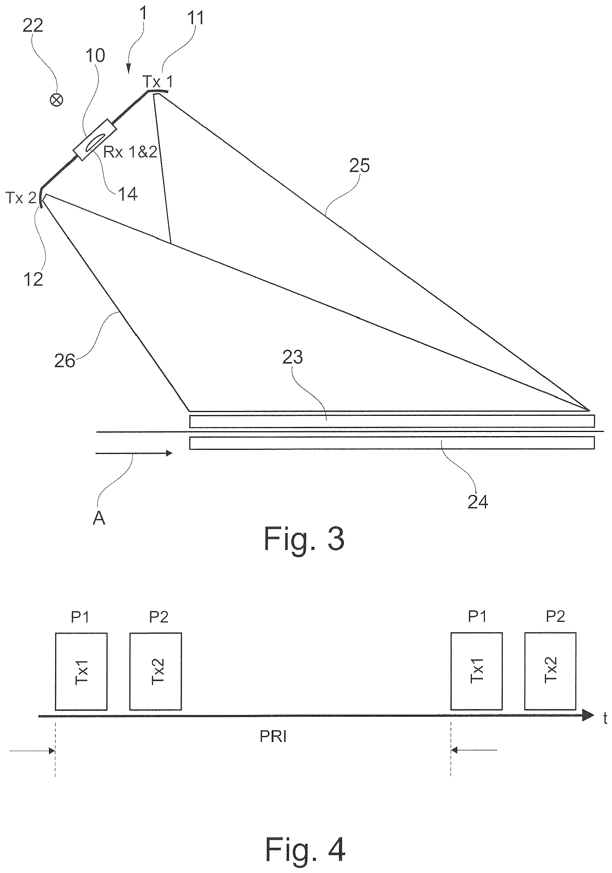

Das Betriebsverfahren wird nachfolgend anhand von Fig. 3 und 4 erläutert. Dargestellt ist in Fig. 3 das in den Figuren 1 und 2 erläuterte SAR-System 1 in einer Seitenansicht mit von den Sendeantennen 11, 12 durch Ausendung von Sendepulsen P1, P2 erzeugten Beleuchtungskegeln 25, 26. Die Beleuchtungskegel weisen auf der Erdoberfläche einen gemeinsamen Beleuchtungsbereich 23 auf, welcher dem Bodenstreifen 24 entspricht. Die Flugrichtung 22 des Satelliten geht senkrecht in die Blattebene hinein. Der mit A gekennzeichnete Pfeil entspricht der bereits erwähnten Range-Richtung, welche auch als Entfernungsrichtung bezeichnet wird.

In Fig. 4 ist ein Diagramm dargestellt, aus dem ersichtlich ist, dass innerhalb einer Pulswiederholzeit PRI zeitlich aufeinanderfolgend zwei Sendepulse (Pulse) P1 und P2, welche von den Sendeeinheiten 11 (gekennzeichnet mit Tx1) bzw. 12 (gekennzeichnet mit Tx2), ausgesendet werden. Obwohl in Fig. 4 die Pulse P1, P2 keinen zeitlichen Überlapp aufweisen, ist es prinzipiell möglich, dass sich die Pulse P1 und P2 auch überlappen. Wieweit eine Überlappung möglich ist, ist abhängig von der zeitlichen Auflösung der Pulse nach einer Pulskompression im Empfänger.

Die Trennung der Echos der Pulse durch die Empfangseinheiten wird durch die hohe Richtwirkung der Empfangsantennen aufgrund der Vielzahl der Empfangseinheiten 17 bzw. 18 in Kombination mit digitaler Strahlformung ermöglicht. Das diesbezügliche Vorgehen bezüglich eines jeweiligen Echos ist dem Fachmann prinzipiell bekannt und beispielsweise in der eingangs erwähnten EP 1 241 487 A1 sowie der Veröffentlichung [1] entnehmbar. Die darin beschriebenen Vorgehensweisen, welche durch Bezugnahme Inhalt der vorliegenden Beschreibung sein sollen, ermöglichen es erfindungsgemäß, aus jedem Echo einen engen Empfangsstrahl zu bilden, welches der momentanen Richtung oder der Ankunft des Echos folgt. Die auf diese Weise gebildeten zwei oder mehr Empfangsstrahlen werden dabei unabhängig voneinander erzeugt.

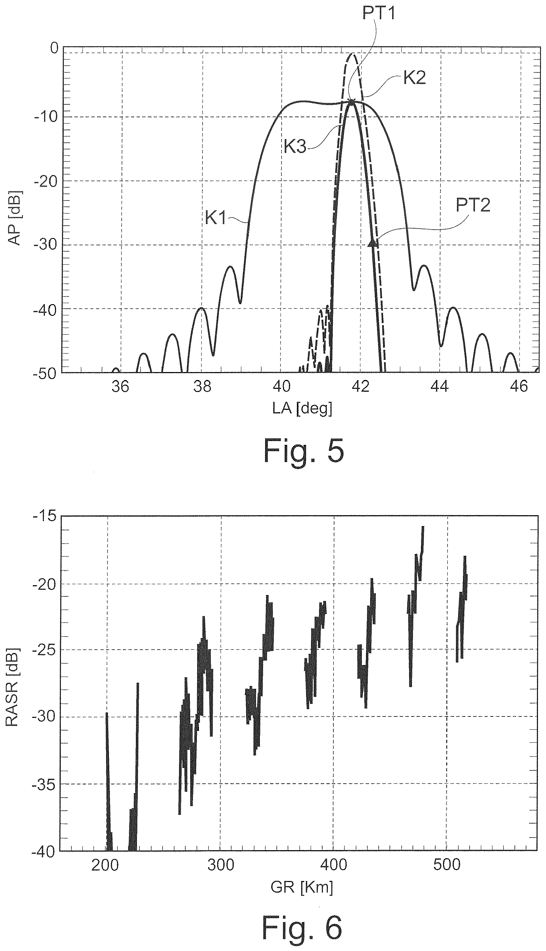

Fig. 5 zeigt ein Beispiel eines gegenwärtigen Elevationsrichtdiagramms, dargestellt als normalisierte Verstärkung AP (Antenna Pattern) über einen Betrachtungswinkel LA (Look Angle). Die mit K1 bezeichnete durchgezogene Linie ist die der Sendeantennen, die gestrichelte mit K2 gezeigte Linie zeigt die Einweg-Empfangsrichtcharakteristik, während die mit K3 dargestellte Linie das kombinierte Muster darstellt. Die Pulsrichtungen für ein gewünschtes Echo eines der Pulse innerhalb der Pulswiederholzeit PRI am Maximum der Kurve K3 (gekennzeichnet mit PT1) und für das Interferenz-Pulsecho (gekennzeichnet mit PT2) sind ebenfalls dargestellt. In diesem Fall beträgt die Zweiwege-Verstärkung für den Interferenz-Puls PT2 mehr als 20 dB Abschwächung im Hinblick zu dem gewünschten zweiten Puls P2.

Dies impliziert, dass ein sog. "*Range-Ambiguity-to-Signal*"-Verhältnis RASR besser als -20 dB erreicht ist, was das typische Erfordernis für ein SAR-System ist. Die Winkeltrennung zwischen den Echos der beiden Pulse P1, P2 ist proportional zu ihrer zeitlichen Verzögerung. Aus diesem Grund kann das RASR-Niveau auf einfache Weise durch die Veränderung des Abstands zwischen den Pulsen P1, P2 moduliert werden. Das resultierende RASR-Verhältnis ist als Funktion der Bodenentfernung (Abstand vom Satellitennadir) von dem Satelliten zu dem beleuchteten Bereich der Bodenplatte in Fig. 6 ersichtlich. Andere Performanz-Metriken des SAR-Systems sind nicht dargestellt, da diese nicht durch das vorgeschlagene Vorgehen beeinflusst sind.

Das beschriebene SAR-System findet beispielsweise Anwendung in interferometrischen, weltraumgestützten Apertur-Radarsystemen, insbesondere bei höheren Trägerfrequenzen, wie dies im Anwendungsbeispiel dargestellt ist.

### Literatur

[1] M. Suess, M. Zubler, R. Zahn "Performance Investigation on the high Resolution, Wide Swath SAR System", Proc. European Conference on Synthetic Aperture Radar EUSAR 2002, Juni 2002, S. 187-190

### Bezugszeichenliste

- 1: SAR-System
- 10: Plattform
- 11: erste Sendeantenne (Tx1)
- 12: zweite Sendeantenne (Tx2)
- 13: erste Empfangsantenne (Rx1)
- 14: zweite Empfangsantenne (Rx2)
- 15: erste Sendespeiseeinheit
- 16: zweite Sendespeiseeinheit
- 17: erste Empfangsspeiseeinheit
- 18: zweite Empfangsspeiseeinheit
- 19: Ausleger
- 20: Ausleger
- 21: Energieversorgung
- 22: Flugrichtung
- 23: Beleuchtungsbereich
- 24: Bodenstreifen
- 25: Beleuchtungskegel der ersten Sendeantenne
- 26: Beleuchtungskegel der zweiten Sendeantenne
- PRI: Pulswiederholzeit
- P1: Sendepuls der ersten Sendeantenne 11
- P2: Sendepuls der zweiten Sendeantenne 12
- t: Zeit
- K1: Kurve 1
- K2: Kurve2
- K3: Kurve3
- PT1: Pulsrichtung für das Echo des Sendepules P1
- PT2: Pulsrichtung für das Echo des Sendepules P2

## Patentansprüche

1. SAR-System, welches dazu ausgebildet ist,
- innerhalb einer Pulswiederholzeit (PRI) zeitlich versetzt zwei oder mehr Pulse (P1, P2) derart auszusenden, dass die Pulse (P1, P2) von Phasenzentren, die an unterschiedlichen Positionen quer zur Flugrichtung angeordnet sind, abgestrahlt werden und die Pulse (P1, P2) einen gleichen Bodenstreifen (24) beleuchten, und
- die empfangenen Echos der Pulse (P1, P2) durch digitale Strahlformung voneinander zu trennen, und
- das zumindest zwei räumlich getrennte Sendeantennen (11, 12) und zumindest eine Empfangsantenne (13, 14) umfasst,
**dadurch gekennzeichnet, dass**
- ein auf den ersten Puls (P1) folgender zweiter Puls (P2) sich mit dem ersten Puls (P1) überschneidet, wobei die Radarechos durch Pulsmodulation voneinander getrennt sind, und
- zur Trennung der Echos der Pulse (P1, P2) das Verfahren Scan-on-Receive eingesetzt wird.

2. SAR-System nach Anspruch 1, **dadurch gekennzeichnet, dass** ein zeitlicher Versatz zwischen zwei aufeinander ausgesendeten Pulsen (P1, P2) wesentlich kleiner als die Pulswiederholzeit (PRI) ist.

3. SAR-System nach Anspruch 1 oder 2, **dadurch gekennzeichnet, dass** ein auf einen ersten Puls (P1) folgender zweiter Puls (P2) sich nicht mit dem ersten Puls (P1) überschneidet.

4. SAR-System nach einem der vorhergehenden Ansprüche, **dadurch gekennzeichnet, dass** die Anzahl der Pulse (P1, P2) innerhalb der Pulswiederholzeit (PRI) maximal der Anzahl der Sendeantennen (11, 12) ist.

5. SAR-System nach einem der vorhergehenden Ansprüche, **dadurch gekennzeichnet, dass** die zumindest zwei Sendeantennen (11, 12) an einem oder mehreren Auslegern einer Plattform angeordnet sind.

6. SAR-System nach einem der vorhergehenden Ansprüche, **dadurch gekennzeichnet, dass** die zumindest eine Empfangsantenne (13, 14) direkt an der Plattform angeordnet ist.

7. SAR-System nach einem der Ansprüche 4 bis 6, **dadurch gekennzeichnet, dass** die zumindest zwei Sendeantennen (11, 12) und die zumindest eine Empfangsantenne (13, 14) an unterschiedlichen Plattformen angeordnet sind.

8. SAR-System nach einem der vorhergehenden Ansprüche, **dadurch gekennzeichnet, dass** die zumindest eine Empfangsantenne (13, 14) eine Antenne ist, welche ein Array an Empfangseinheiten umfasst.

9. Verfahren zum Betreiben eines SAR-Systems, bei dem
- innerhalb einer Pulswiederholzeit (PRI) zeitlich versetzt zwei oder mehr Pulse (P1, P2) ausgesendet werden, dass die Pulse (P1, P2) von Phasenzentren, die an räumlich getrennten Positionen quer zur Flugrichtung angeordnet sind, abgestrahlt werden und die Pulse (P1, P2) einen gleichen Bodenstreifen (24) beleuchten, und
- die empfangenen Echos der Pulse (P1, P2) durch digitale Strahlformung voneinander getrennt werden,
**dadurch gekennzeichnet, dass**
- der auf den ersten Puls (P1) folgende zweite Puls (P2) überschneidend mit dem ersten Puls (P1) ausgesendet wird, wobei die Radarechos der Pulse (P1, P2) durch das Verfahren Scan-on-Receive getrennt werden.

## Claims

1. SAR system which is adapted to
- transmit two or more chronologically offset pulses (P1, P2) within one pulse repetition interval (PRI) in such a way that the pulses (P1, P2) are emitted by phase centres, which are arranged at different positions perpendicular to the flight direction, and the pulses (P1, P2) light up the same strip of ground (24) and
- separate the received echoes of the pulses (P1, P2) from one another through digital beam shaping, and
- which comprises two spatially separated transmission antennae (11, 12) and at least one receiving antenna (13, 14),
**characterised in that**
- a second pulse (P2) following a first pulse (P1) intersects the first pulse (P1), wherein the radar echoes are separated from each other through pulse modulation, and
- to separate the echoes of the pulses (P1, P2) the Scan-on-Receive method is used.

2. SAR system according to claim 1 **characterised in that** a chronological offset between two successively emitted pulses (P1, P2) is much smaller than the pulse repetition interval (PRI).

3. SAR system according to claim 1 or 2 **characterised in that** a second pulse (P2) following a first pulse (P1) does not intersect with the first pulse (P1).

4. SAR system according to any one of the preceding claims **characterised in that** the number of pulses (P1, P2) within the pulse repetition interval (PRI) is maximally the number of transmission antennae (11, 12).

5. SAR system according to any one of the preceding claims **characterised in that** the at least two transmission antennae (11, 12) are arranged on one or more booms of a platform.

6. SAR system according to any one of the preceding claims **characterised in that** the at least one receiving antenna (13, 14) is arranged directly on the platform.

7. SAR system according to any one of claims 4 to 6 **characterised in that** the at least two transmission antennae (11, 12) and the at least one receiving antenna (13, 14) are arranged on different platforms.

8. SAR system according to any one of the preceding claims **characterised in that** the at least one receiving antenna (13, 14) is an antenna which comprises an array of receiving units.

9. Method of operating an SAR system in which
- two or more chronologically offset pulses (P1, P2) are transmitted within one pulse repetition interval (PRI) so that the pulses (P1, P2) are emitted by phase centres, which are arranged at different positions perpendicular to the flight direction, and the pulses (P1, P2) light up the same strip of ground (24) and
- the received echoes of the pulses (P1, P2) are separated from one another through digital beam shaping,
**characterised in that**
- the second pulse (P2) following a first pulse (P1) is emitted to intersect with the first pulse (P1), wherein the radar echoes of the pulses (P1, P2) are separated by the Scan-on-Receive method.

## Revendications

1. Système SAR, lequel est conçu,
- dans temps de répétition d'impulsions (PRI), pour émettre avec un décalage temporel deux ou plusieurs impulsions (P1, P2), de telle sorte que les impulsions (P1, P2) soient émises à partir de centres de phases, qui sont placés en différentes positions à la transversale de la direction de vol et que les impulsions (P1, P2) éclairent une même bande de sol (24) et
- pour séparer les uns des autres les échos réceptionnés des impulsions (P1, P2) par formation numérique de faisceaux, et
- qui comprend au moins deux antennes émettrices (11, 12) séparées dans l'espace et au moins une antenne réceptrice (13, 14),
**caractérisé en ce**
- **qu'**une deuxième impulsion (P2) suivant une première impulsion (P1) se recoupe avec la première impulsion (P1), les échos du radar étant séparés les uns des autres par modulation d'impulsion et
- **que** pour séparer les échos des impulsions (P1, P2), le procédé Scan-on-Receive est utilisé.

2. Système SAR selon la revendication 1, **caractérisé en ce qu'**un décalage temporel entre deux impulsions (P1, P2) émises successivement est nettement inférieur au temps de répétition d'impulsions (PRI).

3. Système SAR selon la revendication 1 ou 2, **caractérisé en ce qu'**une deuxième impulsion (P2) suivant une première impulsion (P1) ne se recoupe pas avec la première impulsion (P1).

4. Système SAR selon l'une quelconque des revendications précédentes, **caractérisé en ce que** le nombre des impulsions (P1, P2) dans le temps de répétition d'impulsions (PRI) est au maximum le nombre des antennes émettrices (11, 12).

5. Système SAR selon l'une quelconque des revendications précédentes, **caractérisé en ce que** les au moins deux antennes émettrices (11, 12) sont placées sur une ou sur plusieurs flèches d'une plate-forme.

6. Système SAR selon l'une quelconque des revendications précédentes, **caractérisé en ce que** l'au moins une antenne réceptrice (13, 14) est directement placée sur la plate-forme.

7. Système SAR selon l'une quelconque des revendications 4 à 6, **caractérisé en ce que** les au moins deux antennes émettrices (11, 12) et l'au moins une antenne réceptrice (13, 14) sont placées sur différentes plates-formes.

8. Système SAR selon l'une quelconque des revendications précédentes, **caractérisé en ce que** l'au moins une antenne réceptrice (13, 14) est une antenne qui comprend un réseau de modules récepteurs.

9. Procédé, destiné à faire fonctionner un système SAR, lors duquel
- dans un temps de répétition d'impulsions (PRI) impulsions (P1, P2) ou plus sont émises avec un décalage temporel, en ce que les impulsions (P1, P2) sont émises à partir de centres de phases, qui sont placés en différentes positions à la transversale de la direction de vol et que les impulsions (P1, P2) éclairent une même bande de sol (24) et
- les échos réceptionnés des impulsions (P1, P2) sont séparés les uns des autres par formation numérique de faisceaux,
**caractérisé en ce que**
- la deuxième impulsion (P2) suivant la première impulsion (P1) est émise en recoupement avec la première impulsion (P1), les échos du radar des impulsions (P1, P2) étant séparés par le procédé Scan-on-Receive.
